(19) Europäisches Patentamt
European Patent Office
Office européen des brevets

(11) **EP 2 831 978 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **13706469.7**

(22) Anmeldetag: **20.02.2013**

(51) Int Cl.:
*H02K 1/27* *(2006.01)*

(86) Internationale Anmeldenummer:
**PCT/EP2013/053299**

(87) Internationale Veröffentlichungsnummer:
**WO 2013/143785 (03.10.2013 Gazette 2013/40)**

(54) **VIBRATIONSVERHINDERUNG BEI SYNCHRONMASCHINEN**

VIBRATION PREVENTION IN SYNCHRONOUS MACHINES

ÉLIMINATION DES VIBRATIONS DANS DES MACHINES SYNCHRONES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012 DE 102012205191**

(43) Veröffentlichungstag der Anmeldung:
**04.02.2015 Patentblatt 2015/06**

(73) Patentinhaber: **Bayerische Motoren Werke Aktiengesellschaft**
**80809 München (DE)**

(72) Erfinder:
• BLUM, Julian
33739 Bielefeld (DE)
• DÖRFER, Reinhard
80995 Muenchen (DE)
• MERWERTH, Joerg
85221 Dachau (DE)
• SCHWARZER, Michael
80331 München (DE)
• ZHENG, Zhiwei
97616 Bad Neustadt (DE)

(56) Entgegenhaltungen:
EP-A1- 1 628 381    DE-A1-102006 033 718
JP-B2- 4 404 086

• Duane Hanselman: "Chapter 1" In: "Brushless Permanent Magnet Motor Design", 1 January 2006 (2006-01-01), Magna Physics Publishing, Lebanon, Ohio, USA, XP055401636, ISBN: 978-1-881855-15-6 pages 1-14,
• D Hanselman: "Chapter 2" In: "Brushless Permanent Magnet Motor Design", 1 January 2006 (2006-01-01), Magna Physics Publishing, Lebanon, Ohio, USA, XP055401641, ISBN: 978-1-881855-15-6 pages 15-44,

**Beschreibung**

Die vorliegende Erfindung betrifft Polbaugruppen zur Reduzierung bzw. Verhinderung von Vibrationen und insbesondere akustischen Emissionen bestimmter Ordnungen bei elektrischen Maschinen.

Stand der Technik

In elektrischen Rotationsmaschinen bewirkt ein elektrisches Magnetfeld zwischen einem Rotor und einem Stator zeitlich veränderliche Kraftwirkungen, durch welche die Struktur der Maschine zu Schwingungen und akustischen Emissionen angeregt wird.

Im Stand der Technik ist hierzu bekannt, die in axialer Richtung hintereinander angeordneten Polkomponenten eines Pols, weiche beispielsweise Eisenbleche umfassen können, gegeneinander zu verdrehen, so dass eine sogenannte "Schrägung" erzeugt wird. Mit anderen Worten ist eine Schrägung ein Versatz der In Axialrichtung hintereinander liegenden Polkomponenten um ein vordefiniertes Maß (meist in Grad in Bezug auf die Drehrichtung der elektrischen Maschine angegeben). Außerdem ist es bekannt, die Gestalt der hintereinander liegenden Bleche derart zu verändern, dass die Stirnfläche, also die Fläche, mit welcher die Pole eine magnetische Wirkung im Luftspalt der Maschine erzeugen bzw. erfahren, sich in axialer Richtung auch unabhängig von einem Versatz durch Verdrehung ändert. Auf diese Weise wird die Kraftwirkung eines geschrägten Pols in Rotationsrichtung sozusagen verteilt, was lokale Kraftmaxima, weiche ein so genanntes "Rastmoment" zur Folge haben, vorteilhaft beeinflussen kann. Die Schrägung kann im Rotor und/oder im Stator der elektrischen Maschine vorgenommen werden. Insbesondere sind die sogenannte lineare Schrägung, welche einen gleichbleibenden Versatz aufeinanderfolgender Polkomponenten in einer Vorzugsrichtung beschreibt, sowie ein symmetrischer V-förmiger Versatz bekannt. Dies ist insbesondere der erwünschten Vermeidung magnetischen Streuflusses geschuldet, welcher die Leistungsfähigkeit einer elektrischen Maschine bei gleich bleibender Masse bzw. bei gleich bleibendem Magnetmaterialaufwand herabsetzt. Insbesondere für die Verminderung bzw. Vermeidung besonders störender harmonischer Schwingungsanteile ("Ordnungen") sind bisher noch keine befriedigenden Ansätze für mit befriedigendem Aufwand herstellbare Vorrichtungen aus dem Stand der Technik bekannt.

JP 4 404086 B2 betrifft einen Rotor und eine Rotationsmaschine mit einem magnetischen Rotationskern.

DE 10 2006 033 718 A1 offenbart in Figur 5 den Oberbegriff des Anspruchs 1.

Eine Aufgabe der vorliegenden Erfindung ist es daher, eine elektrische Maschine mit verringerter Schwingungsneigung zu ermöglichen.

Es ist eine weitere Aufgabe der vorliegenden Erfindung, besonders störende Anteile im Schwingungsverhalten einer elektrischen Maschine zu vermindern

Zusammenfassung der Erfindung

Die vorstehend genannte Aufgabe wird erfindungsgemäß gelöst durch eine Polbaugruppe gemäß Anspruch 1 sowie durch einen Rotor gemäß Anspruch 5 und eine elektrische Maschine gemäß Anspruch 6. Unter einer Polbaugruppe sei im Folgenden eine Struktur verstanden, welche im Betrieb einer elektrischen Maschine eine magnetische Kraftwirkung im Luftspalt der Maschine erzeugt bzw. erfährt, wobei ein Pol der elektrischen Maschine eine oder mehrere erfindungsgemäße Polbaugruppen umfassen kann. Eine Polbaugruppe kann dabei eine Anzahl von Polkomponenten aufweisen, aus welcher die Polbaugruppe zusammengesetzt ist. Gemäß der Erfindung umfassen die Polkomponenten jeweils eine Mehrzahl identischer Eisenbleche, welche vorzugsweise deckungsgleich angeordnet sind. Zusätzlich kann eine Polkomponente auch beispielsweise einen Permanentmagneten umfassen. Insbesondere sei im Rahmen der vorliegenden Erfindung unter einer Polkomponente ein solches Bauteil verstanden, welches einen Teil des magnetischen Flusses über seine Stirnfläche in den Luftspalt der elektrischen Maschine bzw. aus dem Luftspalt der elektrischen Maschine führt. Durch die Verwendung von Eisenblechen verringern sich induzierte Wirbelströme innerhalb der Polkomponenten und eine deckungsgleiche Anordnung verringert den magnetischen Streufluss sowie den Fertigungsaufwand.

Erfindungsgemäß sind die Polkomponenten der Polbaugruppe in einer minimalen Anzahl von 4 vorgesehen, können jedoch in der Praxis in deutlich höherer Anzahl (beispielsweise seien hier 5, 6, 7, 8, 9, 10 sowie alle ganzen Anzahlen von 11 bis 150 genannt) vorgesehen werden. Mindestens alle bis auf eine der Polkomponenten der Polbaugruppe sind hierbei Untergruppen zugeordnet, welche aus zueinander benachbarten Polkomponenten bestehen. Mit anderen Worten können bei einer Anzahl X Polkomponenten einer Polbaugruppe beispielsweise X-1 oder X der Polkomponenten in Untergruppen zugeordnet sein. Unter benachbarten Polkomponenten sei eine räumliche Zuordnung dergestalt verstanden, dass zwischen zwei benachbarten Polkomponenten im Wesentlichen keine weiteren magnetisch wirksamen Elemente in der Polbaugruppe angeordnet sind. Insbesondere seien also dicht, insbesondere in unmittelbarem Kontakt aneinander liegende Polkomponenten als benachbart zu verstehen. Insbesondere seien die in Wechselfeldmaschinen vorkommenden geschichteten Eisenblechstapel genannt, derer zwei gegeneinander verdrehte Eisenbleche die Grenze zwischen zwei Polkomponenten bilden können. Erfindungsgemäß ist weiter vorgesehen, dass einander entsprechend orientierte Stirnflächengrenzen der Polkomponenten einer Untergruppe derart angeordnet sind, dass zwischen aufeinander folgenden Stirnflächengrenzen einer Untergruppe jeweils ein Mindestversatz besteht. Je nach Gestalt der Polkomponenten kann eine Stirnflächengrenze eine markante Berandung der Stirnfläche einer Polkomponente darstellen, insbesondere bei gegenüber dem Luftspalt stark konvexen bzw. konkaven Stirnflächen kann jedoch auch eine beliebige, sinnvolle Definition einer Stirnflächengrenze herangezogen werden, um die relative Anordnung von Polkomponenten einer Polbaugruppe sinnvoll zu beschreiben. Erfindungsgemäß werden also einander entsprechende Stirnflächengrenzen der Polkomponenten einer Untergruppe betrachtet, und verlangt, dass zwischen diesen Stirnflächengrenzen jeweils ein Mindestversatz zu einer nächstliegenden weiteren Stirnflächengrenze derselben Untergruppe besteht. Der Versatz V zwischen zwei beschreiben. Erfindungsgemäß werden also einander entsprechende Stirnflächengrenzen der Polkomponenten einer Untergruppe betrachtet, und verlangt, dass zwischen diesen Stirnflächengrenzen jeweils ein Mindestversatz zu einer nächstliegenden weiteren Stirnflächengrenze derselben Untergruppe besteht. Der Versatz V zwischen zwei nächstliegenden Stirnflächengrenzen kann dabei höher als der Mindestversatz $V_{min}$ sein. Der Versatz zwischen den Stirnflächengrenzen einer Untergruppe liegt dabei jeweils in einer gemeinsamen Richtung. Mit anderen Worten sind in einer aufsteigenden Reihenfolge betrachtete Polkomponenten gegenüber ihrem jeweiligen Vorgänger in derselben Richtung verdreht. Erfindungsgemäß ist vorgesehen, dass der Betrag des Mindestversatzes $V_{min}$ mindestens um einen Faktor 1,5 größer ist als der Betrag eines Vergleichsversatzes $V_{vergl}$. In Zahlen gilt:

$$|V_{min}| = 1,5 * |V_{Vergl}|$$

Der Vergleichsversatz $V_{vergl}$ errechnet sich als der maximal auftretende relative Versatz zweier Polkomponenten innerhalb einer betrachteten Polbaugruppe (bzw. des Pols, sofern der Pol lediglich eine Polbaugruppe umfasst), welcher durch die um 1 verminderte Anzahl X von in der Polbaugruppe enthaltenen Polkomponenten, dividiert wird. Mit anderen Worten wird der maximale Versatz $V_{max}$ (beispielsweise ein Winkel von 4°) innerhalb einer Polbaugruppe durch X-1 geteilt. Diese Anzahl von Polkomponenten errechnet sich als die Gesamtanzahl X der in der Polbaugruppe enthaltenen Polkomponenten "vermindert um 1". In Zahlen gilt:

$$V_{vergl} = V_{max}/(X-1)$$

Dieser Vergleichsversatz ist wesentlich höher, als er beispielsweise in linearen Schrägungen des Standes der Technik vorkommt. Zusätzlich ist innerhalb einer Polbaugruppe zu mehr als der Hälfte der vorhandenen Polkomponenten keine weitere Polkomponente existent, zu welcher diese Polkomponenten einen Versatz von 0° aufweisen. Mit anderen Worten existieren bei einer Anzahl X Polkomponenten mindestens (X/2)+1 verschiedene Versatz-Positionen für Polkomponenten der Polbaugruppe.

Gemäß einem Aspekt der vorliegenden Erfindung wird eine Polbaugruppe für einen Pol einer elektrischen Maschine vorgeschlagen, bei welcher die Polbaugruppe aus zwei Untergruppen von Polkomponenten besteht, und maximal eine Polkomponente keiner der Untergruppen zugeordnet ist. Die erste Untergruppe besteht somit aus einer ersten Anzahl von Polkomponenten, welche, wie oben ausgeführt, benachbart zueinander angeordnet sind. Mit anderen Worten befindet sich also im Wesentlichen kein magnetisch wirksames Material zwischen den Polkomponenten der ersten Untergruppe oder zwischen den Polkomponenten der zweiten Untergruppe. Hinsichtlich der Stirnflächen der Polkomponenten wird auf die obigen Ausführungen verwiesen. Zwischen allen einander entsprechend orientierten Stirnflächengrenzen der Polkomponenten der ersten Untergruppe besteht jeweils ein Mindestversatz in einer gemeinsamen ersten Richtung. Zwischen allen einander entsprechend orientierten Stirnflächengrenzen der Polkomponenten der zweiten Untergruppe besteht ebenso ein jeweiliger Mindestversatz in einer (der ersten Richtung entgegengesetzten) zweiten Richtung. Dabei ist der Betrag des Mindestversatzes zu berechnen, wie in Verbindung mit der obigen Beschreibung ausgeführt. Innerhalb der betrachteten Polbaugruppe existiert zu mehr als der Hälfte der Polkomponenten keine weitere Polkomponente mit einem relativen Versatz von 0°. Weiter umfasst die erste Untergruppe mindestens zwei Polkomponenten und die zweite Untergruppe mindestens drei Polkomponenten. Weiter ist die erste Richtung der zweiten Richtung entgegengesetzt orientiert. Die erfindungsgemäße Anordnung von Polkomponenten einer Polbaugruppe, wie sie in Verbindung mit dem oben stehenden Aspekt der vorliegenden Erfindung beschrieben worden sind, bewirkt, dass störende harmonische Schwingungskomponenten beim Betrieb der elektrischen Maschine gegenüber dem Stand der Technik deutlich verringert werden können.

Die abhängigen Ansprüche betreffen bevorzugte Weiterbildungen und vorteilhafte Ausgestaltungen der vorliegenden Erfindung.

Bevorzugt können die Polkomponenten Stirnflächen aufweisen, welche für jede der Polkomponenten identisch sind. Der Versatz zwischen einander entsprechenden Stirnflächengrenzen, wie er oben zur Definition der relativen Anordnung der Polkomponenten herangezogen wurde, kommt hierbei durch einen Versatz der Stirnflächen der Polkomponenten zustande. Mit anderen Worten werden die Polkomponenten beim Aufbau der Polbaugruppe erfindungsgemäß gegeneinander verdreht. Hierdurch vereinfacht sich die Fertigung und es verringert sich die notwendige Werkzeugvielfalt bei der Fertigung der erfindungsgemäßen Polbaugruppe.

Gemäß einer Weiterbildung der vorliegenden Erfindung können die Stirnflächen der Polkomponenten alle dieselbe Größe und Gestalt haben. Insbesondere können die Polkomponenten bzw. ihre Elemente jeweils durch ein und dasselbe Werkzeug gefertigt werden, wodurch sich die Werkzeugvielfalt, welche zur Fertigung einer erfindungsgemäßen Polbaugruppe erforderlich ist, verringert. Des Weiteren vereinfacht sich das Fertigungsverfahren, indem die Elemente bzw. Polkomponenten in nahezu beliebiger Reihenfolge geschichtet werden können, ohne dass ein negativer Einfluss auf die Funktionsweise der Polbaugruppe die Folge wäre. Die Größe und Gestalt sei hierbei jedoch nicht so verstanden, dass beispielsweise zur Festlegung der Polkomponenten zu verwendende Bohrungen nicht über die

Polkomponenten variieren könnten, um beispielsweise die Herstellung eines Versatzes bei der Montage zu vereinfachen.

Alternativ können die Polkomponenten unterschiedliche Stärken aufweisen und/oder gänzlich unterschiedliche Größe und/oder Gestalt haben. Hierdurch ist es möglich, insbesondere bei gleich bleibender Stärke bzw. Größe bzw. Gestalt der Polkomponenten einer Untergruppe, weiteren Einfluss auf die beim Betrieb der elektrischen Maschine entstehenden Schwingungen zu nehmen.

Bevorzugt können die Stirnflächen einer jeden Polkomponente vier paarweise parallele Stirnflächengrenzenabschnitte aufweisen. Mit anderen Worten werden die in Schichtrichtung (in Bezug auf die elektrische Maschine also die Axialrichtung) aneinander liegenden Stirnflächengrenzenabschnitte der Polkomponentenstirnflächen ergänzt durch zwei zueinander parallel liegende Stirnflächengrenzenabschnitte, welche der Stirnfläche in Drehrichtung vorauseilen bzw. nacheilen. Insbesondere können diese letztgenannten Stirnflächengrenzenabschnitte in Schichtrichtung der Polkomponenten der Polbaugruppe verlaufen, wodurch die Stirnfläche rechtwinklig begrenzt wird. Hierdurch verringern sich der magnetische Streufluss und der Fertigungsaufwand.

Gemäß einem weiteren Aspekt der vorliegenden Erfindung wird ein Rotor für eine elektrische Maschine beschrieben, welcher eine Anzahl von Polbaugruppen, wie sie oben im Detail beschrieben worden sind, umfasst, wobei der Versatz der Stirnflächengrenzen der Polkomponenten einer

Untergruppe bevorzugt (8/P)° bis (18/P)°, insbesondere (10/P)° bis (17/P)° und bevorzugt (15/P)° beträgt. P ist dem Fachmann als Polpaarzahl bekannt. Entsprechend ergeben sich für den Rotor eine Anzahl von 2 P Polbaugruppen, welche in Abhängigkeit der Polpaarzahl P einen bestimmten Versatz zueinander aufweisen. Die hier angegebenen Zahlenwerte beschreiben den mechanischen Versatz der Polkomponenten zueinander.

Gemäß einem weiteren Aspekt der vorliegenden Erfindung wird eine elektrische Maschine zur Verfügung gestellt, welche insbesondere als Permanentmagnet erregte Synchronmaschine und/oder als Wechselfeldmaschine (z.B. Wechselstrommaschine, Drehstrommaschine, Mehrphasen-Maschine) ausgestaltet sein kann. Insbesondere können diese Maschinen als Antriebsaggregate für die Automobilindustrie verwendet werden. Erfindungsgemäß umfasst die elektrische Maschine mindestens zwei Pole, weiche im Rotor der Maschine und/oder im Stator der Maschine angeordnet sein können, wobei jeder Pol mindestens eine Polbaugruppe enthält, wie sie oben ausführlich beschrieben worden Ist. Insbesondere kann die elektrische Maschine einen Rotor enthalten, wie er in Verbindung mit dem vorstehenden Aspekt der vorliegenden Erfindung beschrieben worden ist.

Kurzbeschreibung der Figuren

Die vorstehenden Merkmale und Aspekte der vorliegenden Erfindung werden nachfolgend anhand der beigefügten Zeichnungsfiguren veranschaulicht, in welchen

Figur 1          eine dreidimensionale Darstellung der prinzipiellen Anordnung von Polkomponenten im Rotor einer elektrischen Maschine;

Figur 1a und 1b      schematische Ansichten bekannter Anordnungen von Polkomponenten; und

Figur 2 bis 11       schematische Ansichten von Anordnungen von Polkomponenten innerhalb einer Polbaugruppe zeigen, wobei lediglich in den Figuren 4, 8 und 11 erfindungsgemäße Anordnungen dargestellt sind.

Detaillierte Beschreibung bevorzugter Ausführungsbeispiele

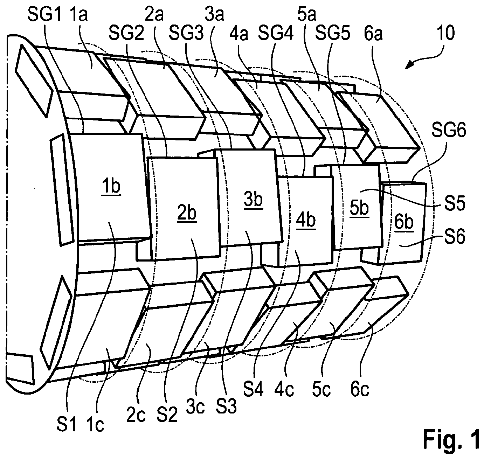

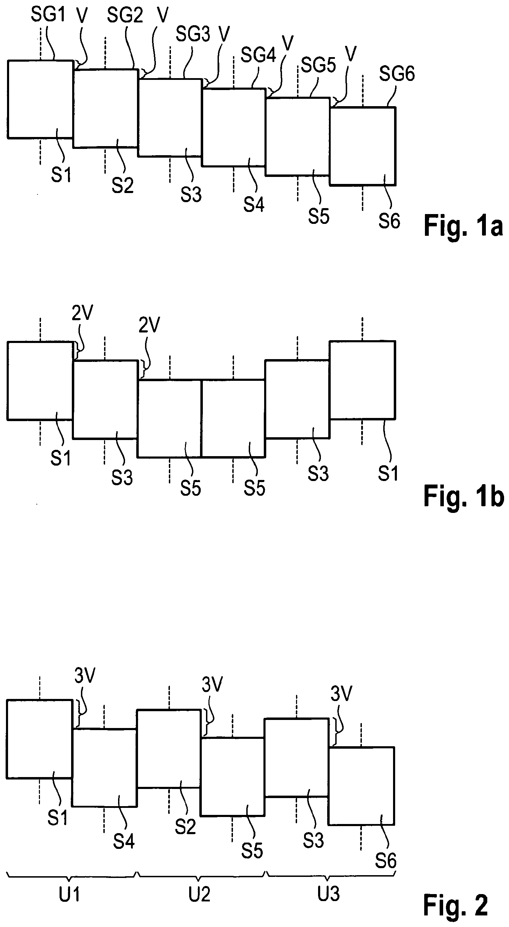

Figur 1 zeigt einen Rotor 10 einer elektrischen Maschine, in welchen lediglich die in Richtung des Luftspalts orientierten Segmente der Polkomponenten 1a, b, c bis 6a, b, c gezeigt sind. Dabei sind in erster Linie drei aufeinander folgende Polbaugruppen a, b und c sichtbar, welche aufeinander folgend auf einer Zylinderfläche des Rotors 10 angeordnet sind. Im Folgenden wird, da die relative Anordnung der Polkomponenten einer jeden Polbaugruppe im Wesentlichen identisch sein können bzw. sich wiederholen, nur auf die Polbaugruppe b eingegangen. Die Polbaugruppe b besteht aus Polkomponenten 1b, 2b, 3b, 4b, 5b und 6b, welche aneinander liegend in axialer Richtung einem (nicht dargestellten) Luftspalt einer elektrischen Maschine zugewandt sind. Insbesondere sind die rechteckig dargestellten Stirnflächen $S_{1-6}$ der Einfachheit halber als ebene Flächen dargestellt, welche bei der praktischen Anwendung zur Verringerung der Luftspalttiefe der gedachten Zylinderfläche des Rotors entsprechend ausgebildet sein können. Die Polkomponente 2b weist gegenüber der Polkomponente 1b einen Versatz in eine erste Richtung auf, während die Polkomponente 3b gegenüber der Polkomponente 2b einen Versatz in eine zweite Richtung aufweist, usw. Mit anderen Worten sind die Polkomponenten 1b bis 6b abwechselnd in unterschiedliche Richtungen, welche im Betrieb des Rotors mit einer in Drehrichtung bzw. entgegen der Drehrichtung liegenden Richtung übereinstimmen würden, gegeneinander verdreht. Durch diese Verdrehung entsteht ein Versatz, durch welche die unterschiedlichen Polkomponenten gegenüber einem nicht geschrägten Stator zu unterschiedlichen Zeitpunkten bzw. Drehpositionen des Rotors im Wesentlichen identische magnetische Kraftwirkungen erzeugen bzw. erfahren würden. Die jeweils in die zweite Drehrichtung weisende Stirnflächengrenze $SG_1$ bis $SG_6$ sowie ihr jeweils in entgegengesetzte Richtung gegenüberliegende Stirnflächengrenze bilden paarweise parallele Stirnflächengrenzabschnitte, welche in Schichtrichtung der Polkomponenten -oder anders ausgedrückt- senkrecht zur Rotationsrichtung der elektrischen Maschine orientiert sind. Die übrigen Stirnflächengrenzabschnitte der dargestellten Polkomponenten sind senkrecht zur Schichtrichtung bzw. in Rotationsrichtung des dargestellten Rotors 10 orientiert.

Figur 1a zeigt eine schematische Anordnung von Polkomponenten, wie sie aus dem Stand der Technik als sogenannte "lineare Schrägung" bekannt ist. Die Stirnflächen $S_1$ bis $S_6$ der Polkomponenten 1 bis 6 sind in einer gemeinsamen Richtung (im Bild nach rechts abwärts gerichtet) um einen konstanten Versatz V gegeneinander versetzt. Die fünf Versätze zwischen den sechs dargestellten Polkomponenten würden bei einem typischen Versatz zwischen den Polkomponenten 1 bis 6 von 25°/P jeweils 5°/P betragen. Da die dargestellten Polkomponenten 1 bis 6 gleiche Stirnflächen $S_1$ bis $S_6$ aufweisen, stimmt der Versatz der Stirnflächengrenzen $SG_1$ bis $SG_6$ mit dem Versatz der Stirnflächen $S_1$ bis $S_6$ überein. Die dargestellte Anordnung wird im Stand der Technik verwendet, um das Rastmoment und Rippelmoment zu vermindern. Hierbei wird im Stand der Technik die Rotorwelle bzw. die gesamte Struktur der kraftführenden Teile der elektrischen Maschine als starr angenommen, was in erster Näherung zulässig sein kann, jedoch Optimierungspotential bzw. mögliche Materialersparnisse ignoriert.

Figur 1b zeigt eine alternative schematische Anordnung von Polkomponenten einer Polbaugruppe des Standes der Technik, wie sie als "V-geschrägt" bezeichnet wird. Zwischen einer ersten Polkomponente 1 und einer zweiten Polkomponente 3 besteht ein Versatz 2V ebenso wie zwischen einer dritten Polkomponente 5 und der zweiten Polkomponente 3. Die vierte Polkomponente (ebenfalls 5) weist keinen Versatz gegenüber der dritten Polkomponente 5 auf. Die fünfte Polkomponente 3 und die sechste Polkomponente 1 weisen zu ihrem Vorgänger jeweils einen Versatz 2V in die entgegengesetzte Richtung auf. Zur Veranschaulichung sind die Polkomponenten in den beigefügten Zeichnungsfiguren aufsteigend durchnummeriert, wie sie an einer identischen Position am Stator einer elektrischen Maschine in zeitlicher Reihenfolge vorbeigedreht würden.

Figur 2 zeigt eine schematische Anordnung von Polkomponenten einer Polbaugruppe gemäß dem ersten Beispiel. Die Polkomponenten 1 bis 6 sind Untergruppen $U_1$ bis $U_3$ angeordnet, innerhalb welcher die jeweils enthaltenen Polkomponenten einen Versatz von 3V aufweisen. Somit besteht sowohl zwischen den Polkomponenten 1 und 4 der Untergruppe $U_1$ als auch zwischen den Polkomponenten 2 und 5 der Untergruppe $U_2$ und zwischen den Polkomponenten 3 und 6 der Untergruppe $U_3$ der Versatz von 3V in ein und derselben Richtung. Die aneinander angrenzenden Polkomponenten unterschiedlicher Untergruppen, nämlich die Polkomponenten 4 und 2 bzw. 5 und 3, weisen einander gegenüber einen in entgegengesetzter Richtung orientierten Versatz 2V auf. Mit anderen Worten ist eine mittlere Schrägung der gesamten Polbaugruppe einem größeren, jedoch gleichgerichteten Versatz der Polkomponenten innerhalb einer jeweiligen Untergruppe überlagert.

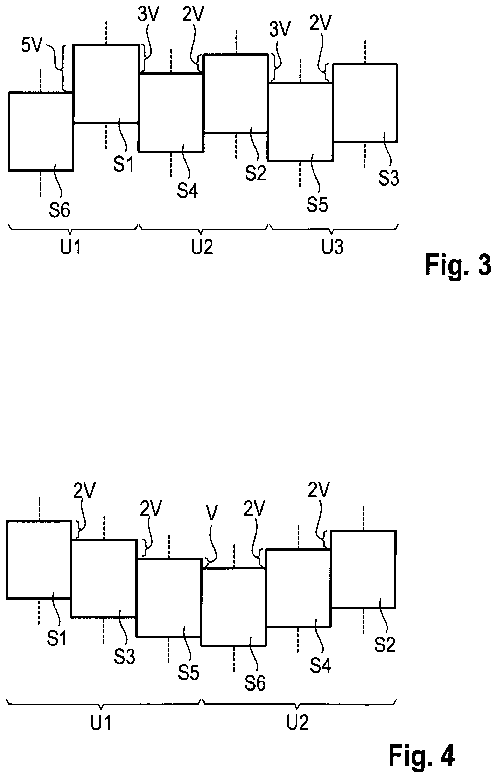

Figur 3 zeigt die in Figur 2 dargestellte schematische Anordnung, bei welcher jedoch die Polkomponente 6 der Polkomponente 1 vorangestellt worden ist. Es bilden somit die Polkomponenten 6 und 1 einander benachbarte und um einen Versatz 5V gegeneinander versetzte Polkomponenten einer Untergruppe $U_1$. Während sich an der relativen Zuordnung der übrigen Polkomponenten 1 bis 5 keine Veränderung ergeben hat, sind nun jedoch die Polkomponenten 4 und 2 als Untergruppe $U_2$ sowie die Polkomponenten 5 und 3 als Untergruppe $U_3$ zueinander angeordnet. Der erfindungsgemäß geforderte Mindestversatz zwischen zwei Polkomponenten innerhalb einer Untergruppe ist dennoch erkennbar gewahrt.

Figur 4 zeigt ein Ausführungsbeispiel gemäß der vorliegenden Erfindung, bei welcher eine V-förmige Anordnung der Polkomponenten 1 bis 6 verwendet wird. Die Polkomponenten 1, 3 und 5 der Untergruppe $U_1$ sind in einer ersten Richtung um einen Versatz 2V jeweils gegeneinander versetzt. An die dritte Polkomponente 5 grenzt die vierte Polkomponente 6 mit einem Versatz V, welcher in der gleichen Richtung orientiert ist, wie die Polkomponenten 1, 3 und 5 der

Untergruppe $U_1$ zueinander versetzt sind. Auch die Polkomponenten 6, 4 und 2 der zweiten Untergruppe $U_2$ sind jeweils um einen Versatz 2V gegeneinander versetzt. Dieser ist jedoch in die entgegengesetzte Richtung orientiert.

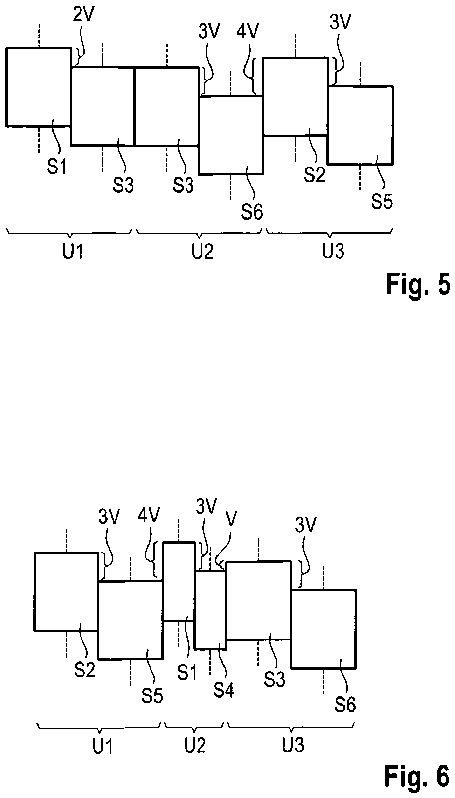

Figur 5 zeigt eine weitere mögliche schematische Anordnung von 6 Polkomponenten gemäß dem ersten Beispiel. Die 6 Polkomponenten 1 bis 6 sind hierbei in Untergruppen $U_1$ bis $U_3$ zusammengefasst, und weisen innerhalb der Untergruppen $U_1$ bis $U_3$ einen Versatz von 2V (Untergruppe $U_1$) bzw. einen Versatz von 3V (Untergruppen $U_2$ und $U_3$) in jeweils identischer Richtung auf. Entgegen der in Figur 2 gezeigten Anordnung sind die aneinander grenzenden Polkomponenten 3 der Un-

tergruppen $U_1$ und $U_2$ nicht gegeneinander versetzt. Mit anderen Worten weisen sie einen Versatz von 0° zueinander auf. Die dargestellte Anordnung vermindert magnetische Streuflüsse zwischen der zweiten und dritten Polkomponente 3. Zudem wird durch die dargestellte Anordnung eine jeweilige Schrägung der Polkomponenten innerhalb einer Untergruppe $U_1$ bis $U_3$ einer abwechselnden Versatzrichtung der Untergruppen $U_1$ bis $U_3$ zueinander überlagert. Mit anderen Worten ist die Untergruppe $U_2$ gegenüber der Untergruppe $U_1$ in eine erste Richtung versetzt, während die dritte Untergruppe $U_3$ gegenüber der zweiten Untergruppe $U_2$ in eine zweite (entgegengesetzte) Richtung versetzt ist.

Figur 6 zeigt eine weitere schematische Ansicht einer möglichen Ausgestaltung einer Polbaugruppe gemäß dem ersten Beispiel, wobei die Polkomponenten 1 und 4 der Untergruppe $U_2$ eine reduzierte Stärke und somit in Schichtrichtung schmalere Stirnflächen aufweisen. Die im Betrieb auftretenden Kräfte auf die 6 Polkomponenten werden im Betrieb dennoch günstig kompensiert, indem auf bestimmte harmonische Schwingungsordnungen entgegengesetzt wirkende

Polkomponenten, nämlich die einer jeden Untergruppe $U_1$ bis $U_3$, nicht nur einen geeigneten Versatz, sondern auch eine ähnliche magnetische Wirkung dem Betrage nach erzeugen bzw. erfahren.

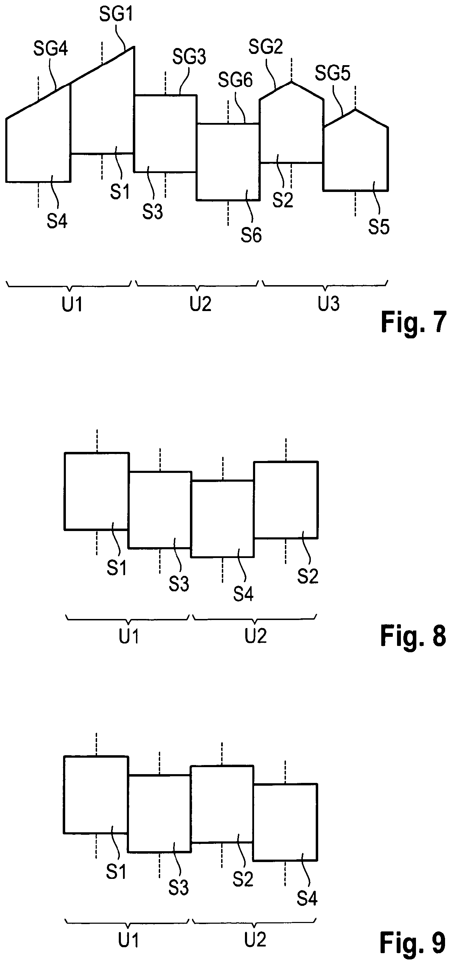

Figur 7 zeigt eine schematische Anordnung von Polkomponenten 1 bis 6, welche alternative Stirnflächengeometrien aufweisen. Beispielhaft sind die in eine erste Drehrichtung des Rotors weisenden Stirnflächengrenzen $SG_4$ und $SG_1$ geschrägt einerseits zur Schichtrichtung der Polkomponenten 1 bis 6 als auch zur Drehrichtung des Rotors geschrägt ausgeführt. Beide Stirnflächengrenzen $SG_1$ und $SG_4$ weisen dabei eine identische Schrägung auf, welche trotz gleich bleibendem bzw. beibehaltenem Versatz zwischen den Polkomponenten 1 und 4 nahtlos ineinander übergeht. Im Gegensatz hierzu weisen die Polkomponenten 2 und 5 der Untergruppe $U_3$ jeweils dachförmige bzw. pfeilförmige Stirnflächengrenzen $SG_2$ und $SG_5$ auf. Die dargestellten Varianten für die Stirnflächengrenzen stellen weitere Variationsmöglichkeiten dar, um den magnetischen Streufluss einerseits und das Rastmoment sowie das Vibrationsverhalten andererseits zu beeinflussen.

Figur 8 zeigt eine schematische Ansicht einer Polbaugruppe gemäß der vorliegenden Erfindung, welche lediglich vier Polkomponenten 1 bis 4, welche in zwei Untergruppen $U_1$ und $U_2$ gegliedert sind, darstellt. Während die Polkomponente 3 gegenüber der Polkomponente 1 einen Versatz von 2V in einer ersten Richtung aufweist, ist zwischen der Polkomponente 2 und der Polkomponente 4 ein Versatz von 2 in einer entgegengesetzten Richtung vorgesehen. Mit anderen Worten sind die Versätze innerhalb der Untergruppen $U_1$ und $U_2$ entgegengesetzt zueinander gerichtet. Zudem weist die der Untergruppe $U_2$ angehörende Polkomponente 4 gegenüber der der Untergruppe $U_1$ angehörenden Polkomponente 3 einen Versatz V in der ersten Richtung auf.

Figur 9 zeigt eine schematische Anordnung von vier Polkomponenten 1 bis 4 gemäß dem ersten Beispiel. Die vier Polkomponenten 1 bis 4 sind in zwei Untergruppen $U_1$ und $U_2$ gegliedert, wobei die Polkomponenten 3 bzw. 4 gegenüber den Polkomponenten 1 bzw. 2 einen Versatz 2V in einer gemeinsamen Richtung aufweisen. Jedoch sind die Polkomponenten 2 und 3, durch welche die Untergruppen $U_1$ und $U_2$ aneinander grenzen, in einer entgegengesetzten Richtung zueinander versetzt.

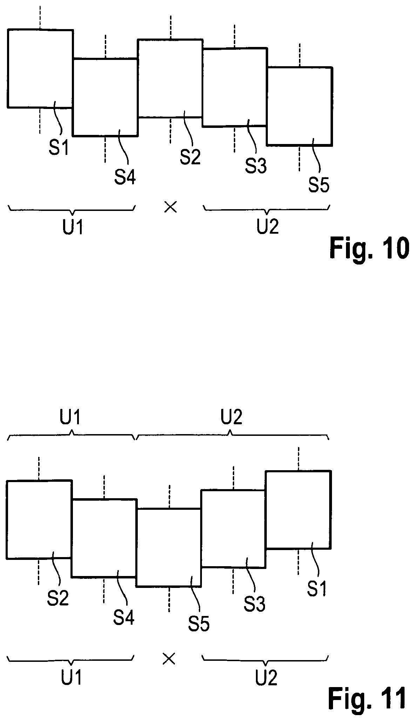

Figur 10 zeigt eine weitere schematische Ansicht einer Polbaugruppe gemäß dem ersten Beispiel. Die zwei Polkomponenten 1 und 4 der ersten Untergruppe $U_1$ sowie die Polkomponenten 3 und 5 der zweiten Untergruppe $U_2$ weisen einen Versatz von 3V bzw. 2V in einer ersten Richtung zueinander auf. Die einander zugewandten Polkomponenten 4 und 3 der Untergruppen $U_1$ und $U_2$ weisen einen Versatz von 1 in entgegengesetzter Richtung zueinander auf. Jedoch ist zwischen diesen Polkomponenten 4 und 3 eine keiner der Untergruppen zuordenbare Polkomponente 2 angeordnet. Mit anderen Worten ist der Versatz zwischen der Polkomponente 2 und der Polkomponente 3 nicht groß genug, um sie erfindungsgemäß der Untergruppe $U_2$ zuordnen zu können. Zudem weist die Polkomponente 2 gegenüber den in Untergruppe $U_1$ enthaltenen Polkomponenten 1 und 4 eine entgegengesetzt gerichtete Versatzrichtung auf. Dennoch kann eine Polkomponente, welche keiner der Untergruppen zuordenbar ist, verwendet werden, um einerseits die maximal abgebbare Leistung einer elektrischen Maschine zu steigern, andererseits um gezielt weitere Anteile im Schwingungsspektrum während des Betriebs zu beeinflussen.

Figur 11 zeigt eine schematische Anordnung einer erfindungsgemäßen Polbaugruppe gemäß der vorliegenden Erfindung. Die fünf Polkomponenten 1 bis 5 lassen sich entweder restlos in zwei Untergruppen $U_1$, enthaltend die Polkomponenten 2 und 4, sowie $U_2$, enthaltend die Polkomponenten 5, 3 und 2, gliedern, oder nur die Polkomponenten 3 und 1 werden der Untergruppe $U_2$ zugeordnet, wobei die Polkomponente 5 außerhalb der Untergruppen $U_1$ und $U_2$ verbleibt. Hierbei weisen die Polkomponenten 2 und 4 einen Versatz 2V in einer ersten

Richtung zueinander auf, während die Polkomponenten 5 und 3 bzw. 3 und 1 zueinander jeweils einen Versatz 2V in einer zweiten Richtung aufweisen. Die aneinander grenzenden Polkomponenten 4 und 5 weisen zwar einen Versatz V in der ersten Richtung zueinander auf, sein Betrag ist jedoch nicht ausreichend, um ihn der ersten Untergruppe $U_1$ zuordnen zu können. Die Polkomponente 5 kann daher der zweiten Untergruppe $U_2$ zugeordnet oder ohne eine Zuordnung zu einer Untergruppe Gruppe in der erfindungsgemäßen Polbaugruppe verstanden werden.

Es ist ein Kerngedanke der vorliegenden Erfindung, hinsichtlich bestimmter harmonischer Vibrationen geeignete Polbaugruppen bzw. Rotoren bzw. elektrische Maschinen zur Verfügung zu stellen, bei welchen räumlich nahe beieinander liegende Polkomponenten entgegengesetzte Wirkungen hinsichtlich der Entstehung bestimmter Harmonischer haben. Hierzu ist ein Versatz benachbarter Polkomponenten erforderlich, der deutlich über den aus dem Stand der Technik bekannten Versatz hinausgeht. Dabei wird bewusst eine Erhöhung des magnetischen Streuflusses und damit bei gleicher Magnetmasse verringerte erzielbare Leistung in Kauf genommen, um das Schwingungsverhalten einer elektrischen Maschine positiv zu beeinflussen. Dem Fachmann ist dabei ersichtlich, dass der zu wählende Versatz der Polkomponenten von vielen Parametern abhängt, welche aufeinander Einfluss nehmen. Beispielsweise ist die Rotorpolpaarzahl und Statorpolpaarzahl für den maximalen relativen Versatz zwischen dem innerhalb einer Polbaugruppe auftretenden relativen maximalen Versatz von Polkomponenten entscheidend. Zudem hängt der relative Versatz zweier erfindungsgemäß benachbarter Polkomponenten von derjenigen Schwingungsordnung des Gesamtsystems ab, welche es jeweils zu vermindern gilt. Lediglich beispielhaft sei daher ein sich bei einer Rotorpolpaarzahl von 4 ergebende Winkel von 3,75° zwischen den Polkomponenten einer Untergruppe als geeigneter Versatz genannt, um die 48. Harmonische signifikant zu reduzieren.

Unter anderem liegt der Erfindung die Erkenntnis zugrunde, dass die Annahme einer starren Welle bzw. Maschinenstruktur nur bedingt auch hinsichtlich der Berücksichtigung hoher harmonischer Ordnungen einer elektrischen Maschine zutrifft. Die vorliegende Erfindung schlägt daher Konzepte sowie Dimensionierungsvorschläge vor, mittels welcher bestimmte harmonische Ordnungen des Betriebsgeräusches vermindert werden können.

**Bezugszeichenliste:**

| | |
|---|---|
| 1 bis 6 | Polkomponenten |
| 10 | Rotor |
| a, b, c | Polbaugruppen |
| $S_1$ bis $S_6$ | Stirnflächen |
| $SGA_1$ bis $SGA_6$ | Stirnflächengrenzenabschnitte |
| $SG_1$ bis $SG_6$ | Stirnflächengrenze |
| $U_1$ bis $U_3$ | Untergruppe |
| V | Versatz |
| $V_{min}$ | Mindestversatz |
| $V_{max}$ | maximal auftretender relativer Versatz |
| $V_{vergl}$ | Vergleichsversatz |
| X | Anzahl Polkomponenten pro Polbaugruppe |

**Patentansprüche**

1. Polbaugruppe für einen Pol einer elektrischen Maschine, wobei die Polbaugruppe aus einer Anzahl (X) Polkomponenten (1a-6a, 1b-6b, 1c-6c) besteht, von welchen mindestens die Anzahl (X) vermindert um 1 einer von genau zwei Untergruppen ($U_1$, $U_2$) zugeordnet ist, und wobei die Polkomponenten (1a-6a, 1b-6b, 1c-6c) jeweils eine Mehrzahl identischer Eisenbleche umfassen, welche insbesondere deckungsgleich angeordnet sind, wobei eine erste Untergruppe ($U_1$) aus einer ersten Mehrzahl geschichteter Polkomponenten (1, 3, 5) besteht und eine zweite Untergruppe ($U_2$) aus einer zweiten Mehrzahl geschichteter Polkomponenten (6, 4, 2) besteht, wobei die Polkomponenten (1a-6a, 1b-6b, 1c-6c) jeweils eine Stirnfläche ($S_{1-6}$) aufweisen, wobei

- alle einander entsprechend orientierten Stirnflächengrenzen ($SG_{1,3,5}$) der Polkomponenten (1, 3, 5) der ersten Untergruppe ($U_1$) derart angeordnet sind, dass zwischen aufeinander folgenden Stirnflächengrenzen ($SG_{1,3,5}$) der ersten Untergruppe ($U_1$) jeweils ein Mindestversatz in einer gemeinsamen ersten Richtung besteht,
- alle einander entsprechend orientierten Stirnflächengrenzen ($SG_{6,4,2}$) der Polkomponenten (6, 4, 2) der zweiten Untergruppe ($U_2$) derart angeordnet sind, dass zwischen aufeinander folgenden Stirnflächengrenzen ($SG_{6,4,2}$) der zweiten Untergruppe ($U_2$) jeweils ein Mindestversatz in einer gemeinsamen zweiten Richtung besteht, wobei
- die erste Mehrzahl geschichteter Polkomponenten (1, 3, 5) mindestens 2 und die zweite Mehrzahl geschichteter Polkomponenten (6, 4, 2) mindestens 3 ist, und die erste Richtung der zweiten Richtung entgegengesetzt orientiert ist **dadurch gekennzeichnet, dass**
- der Betrag des Mindestversatzes mindestens um einen Faktor 1,5 größer ist als ein Vergleichsversatz, welcher sich errechnet als der maximal auftretende relative Versatz zweier Polkomponenten (1, 6) innerhalb der Polbaugruppe (a, b, c) dividiert durch die um 1 verminderte Anzahl (X) aller Polkomponenten (1a-6a, 1b-6b, 1c-6c) in der Polbaugruppe (a, b, c),

wobei innerhalb der Polbaugruppe (a, b, c) zu mehr als der Hälfte (X/2) der Anzahl (X) der Polkomponenten (1a-6a, 1b-6b, 1c-6c) keine weitere Polkomponente mit einem relativen Versatz gleich 0 existiert.

2. Polbaugruppe nach Anspruch 1, wobei der Versatz (V) zwischen den entsprechenden Stirnflächengrenzen ($SG_{1-6}$) durch einen Versatz (V) der Stirnflächen ($S_{1-6}$) der Polkomponenten (1a-6a, 1b-6b, 1c-6c) zustande kommt.

**3.** Polbaugruppe nach einem der vorstehenden Ansprüche, wobei die Stirnflächen ($S_{1-6}$) der Polkomponenten alle dieselbe Größe und Gestalt haben, und/oder Polkomponenten (1a-6a, 1b-6b, 1c-6c), insbesondere diejenigen einer Untergruppe ($U_1$) gegenüber denjenigen einer weiteren Untergruppe ($U_2$), unterschiedliche Stärken aufweisen.

**4.** Polbaugruppe nach einem der vorstehenden Ansprüche, wobei die Stirnflächen ($S_{1-6}$) einer jeden Polkomponente vier paarweise parallele Stirnflächengrenzenabschnitte aufweisen, von welchen zwei im Wesentlichen in einer Richtung senkrecht zur Richtung der Versätze (V) zwischen den Polkomponenten (1a-6a, 1b-6b, 1c-6c) verlaufen.

**5.** Rotor (10) für eine elektrische Maschine umfassend 2P Polbaugruppen (a, b, c) nach einem der vorstehenden Ansprüche, wobei der Versatz (V) der Stirnflächengrenzen der Polkomponenten (1a-6a, 1b-6b, 1c-6c) einer Untergruppe bevorzugt (8/P)° bis (18/P)°, insbesondere (10/P)° bis (17/P)° und bevorzugt (15/P)° beträgt, wobei P die Rotorpolpaarzahl ist.

**6.** Elektrische Maschine, insbesondere permanentmagneterregte Synchronmaschine und/oder Wechselfeldmaschine, umfassend mindestens 2 Pole, welche im Rotor (10) der Maschine und/oder im Stator der Maschine angeordnet sind, mit jeweils einer Polbaugruppe (a, b, c) nach einem der vorstehenden Ansprüche 1-4 und insbesondere mit einem Rotor (10) nach Anspruch 4.

**Claims**

**1.** Pole assembly for a pole of an electrical machine, wherein the pole assembly consists of a number (X) of pole components (1a-6a, 1b-6b, 1c-6c), of which at least the number (X) reduced by 1 is associated with one of precisely two subgroups ($U_1$, $U_2$), and wherein the pole components (1a-6a, 1b-6b, 1c-6c) each comprise a multiple number of identical iron laminates which are arranged, in particular, in a congruent manner, wherein
a first subgroup ($U_1$) consists of a first multiple number of layered pole components (1, 3, 5), and
a second subgroup ($U_2$) consists of a second multiple number of layered pole components (6, 4, 2), wherein the pole components (1a-6a, 1b-6b, 1c-6c) each have an end face ($S_{1-6}$), wherein

- all end face borders ($SG_{1,3,5}$), which are of corresponding orientation to one another, of the pole components (1, 3, 5) of the first subgroup ($U_1$) are arranged in such a way that, between successive end face borders ($SG_{1,3,5}$) of the first

subgroup ($U_1$), there is in each case a minimum offset in a common first direction,
- all end face borders ($SG_{6,4,2}$), which are of corresponding orientation to one another, of the pole components (6, 4, 2) of the second subgroup ($U_2$) are arranged in such a way that, between successive end face borders ($SG_{6,4,2}$) of the second subgroup ($U_2$), there is in each case a minimum offset in a common second direction, wherein
- the first multiple number of layered pole components (1, 3, 5) is at least 2 and the second multiple number of layered pole components (6, 4, 2) is at least 3, and the first direction is oriented opposite the second direction,
**characterized in that**
- the magnitude of the minimum offset is greater at least by a factor of 1.5 than a comparison offset which is calculated as the maximum occurring relative offset between two pole components (1, 6) within the pole assembly (a, b, c) divided by the number (X), reduced by 1, of all the pole components (1a-6a, 1b-6b, 1c-6c) in the pole assembly (a, b, c),

wherein no further pole components with a relative offset equal to 0 exist within the pole assembly (a, b, c) for more than half (X/2) the number (X) of pole components (1a-6a, 1b-6b, 1c-6c).

**2.** Pole assembly according to Claim 1, wherein the offset (V) between the corresponding end face borders ($SG_{1-6}$) is produced by an offset (V) of the end faces ($S_{1-6}$) of the pole components (1a-6a, 1b-6b, 1c-6c).

**3.** Pole assembly according to either of the preceding claims, wherein the end faces ($S_{1-6}$) of the pole components are all of the same size and shape, and/or pole components (1a-6a, 1b-6b, 1c-6c), in particular those of a subgroup ($U_1$) in comparison to those of a further subgroup ($U_2$), have different thicknesses.

**4.** Pole assembly according to one of the preceding claims, wherein the end faces ($S_{1-6}$) of each pole component have four pairwise parallel end face border sections, of which two run substantially in a direction perpendicular to the direction of the offsets (V) between the pole components (1a-6a, 1b-6b, 1c-6c).

**5.** Rotor (10) for an electrical machine comprising 2P pole assemblies (a, b, c) according to one of the preceding claims, wherein the offset (V) of the end face borders of the pole components (1a-6a, 1b-6b, 1c-6c) of one subgroup is preferably (8/P)° to (18/P)°, in particular (10/P)° to (17/P)° and preferably (15/P)°, where P is the number of rotor pole pairs.

**6.** Electrical machine, in particular synchronous machine with permanent-magnet excitation and/or alternating field machine, comprising at least 2 poles which are arranged in the rotor (10) of the machine and/or in the stator of the machine and each have a pole assembly (a, b, c) according to one of the preceding Claims 1-4, and in particular having a rotor (10) according to Claim 4.

**Revendications**

**1.** Sous-ensemble de pôle pour un pôle d'une machine électrique, le sous-ensemble de pôle étant composé d'un certain nombre (X) de composants polaires (1a-6a, 1b-6b, 1c-6c) dont au moins le nombre (X) moins 1 est associé à l'un de deux sous-groupes ($U_1$, $U_2$) exactement, et les composants polaires (1a-6a, 1b-6b, 1c-6c) comprenant respectivement une pluralité de tôles de fer identiques qui sont disposées en particulier de manière coïncidente,
un premier sous-groupe ($U_1$) étant composé d'une première pluralité de composants polaires (1, 3, 5) empilés, et
un deuxième sous-groupe ($U_2$) étant composé d'une deuxième pluralité de composants polaires (6, 4, 2) empilés, les composants polaires (1a-6a, 1b-6b, 1c-6c) présentant respectivement une surface frontale ($S_{1-6}$), dans lequel

- toutes les limites de surface frontale ($SG_{1,3,5}$), orientées de manière correspondante les unes aux autres, des composants polaires (1, 3, 5) du premier sous-groupe ($U_1$) sont disposées de telle sorte qu'il existe respectivement un décalage minimal dans une première direction commune entre des limites de surface frontale ($SG_{1,3,5}$) successives du premier sous-groupe ($U_1$),
- toutes les limites de surface frontale ($SG_{6,4,2}$), orientées de manière correspondante les unes aux autres, des composants polaires (6, 4, 2) du deuxième sous-groupe ($U_2$) sont disposées de telle sorte qu'il existe respectivement un décalage minimal dans une deuxième direction commune entre des limites de surface frontale ($SG_{6,4,2}$) successives du deuxième sous-groupe ($U_2$), dans lequel
- la première pluralité de composants polaires (1, 3, 5) empilés est égale à au moins 2 et la deuxième pluralité de composants polaires (6, 4, 2) empilés est égale à au moins 3, et la première direction est orientée à l'opposé de la deuxième direction, **caractérisé en ce que**
- la valeur du décalage minimal est supérieure au moins d'un facteur de 1,5 à un décalage de référence qui est calculé comme le décalage relatif survenant au maximum de deux composants polaires (1, 6) à l'intérieur du sous-ensemble de pôle (a, b, c) divisé par le nombre (X) moins 1 de tous les composants polaires (1a-6a, 1b-6b, 1c-6c) dans le sous-ensemble de pôle (a, b, c),

dans lequel, à l'intérieur du sous-ensemble de pôle (a, b, c), pour plus de la moitié (X/2) du nombre (X) des composants polaires (1a-6a, 1b-6b, lc-6c), il n'existe aucun autre composant polaire ayant un décalage relatif égal à 0.

**2.** Sous-ensemble de pôles selon la revendication 1, dans lequel le décalage (V) entre les limites de surface frontale ($SG_{1-6}$) correspondantes est occasionné par un décalage (V) des surfaces frontales ($S_{1-6}$) des composants polaires (1a-6a, 1b-6b, lc-6c).

**3.** Sous-ensemble de pôles selon l'une quelconque des revendications précédentes, dans lequel les surfaces frontales ($S_{1-6}$) des composants polaires présentent toutes la même dimension et forme, et/ou les composants polaires (1a-6a, 1b-6b, 1c-6c), en particulier ceux d'un sous-groupe ($U_1$), présentent différentes épaisseurs par rapport à ceux d'un autre sous-groupe ($U_2$).

**4.** Sous-ensemble de pôles selon l'une quelconque des revendications précédentes, dans lequel les surfaces frontales ($S_{1-6}$) de chaque composant polaire présentent quatre parties de limites de surface frontale parallèles par paires dont deux s'étendent substantiellement dans une direction perpendiculaire à la direction des décalages (V) entre les composants polaires (1a-6a, 1b-6b, 1c-6c).

**5.** Rotor (10) pour une machine électrique, comprenant 2P sous-ensembles de pôle (a, b, c) selon l'une quelconque des revendications précédentes, dans lequel le décalage (V) des limites de surface frontale des composants polaires (1a-6a, 1b-6b, 1c-6c) d'un sous-groupe est de préférence de (8/P)° à (18/P)°, en particulier de (10/P)° à (17/P)°, et de préférence de (15/P)°, où P est le nombre de paires de pôles de rotor.

**6.** Machine électrique, en particulier machine synchrone à excitation par aimant permanent et/ou machine à champ alternatif, comprenant au moins 2 pôles qui sont disposés dans le rotor (10) de la machine et/ou dans le stator de la machine, avec respectivement un sous-ensemble de pôle (a, b, c) selon l'une quelconque des revendications précédentes 1 à 4 et en particulier un rotor (10) selon la revendication 4.

Fig. 1

SG1 V SG2 V SG3 V SG4 V SG5 V SG6

S1 S2 S3 S4 S5 S6

**Fig. 1a**

2V 2V

S1 S3 S5 S5 S3 S1

**Fig. 1b**

3V 3V 3V

S1 S4 S2 S5 S3 S6

U1 U2 U3

**Fig. 2**

**Fig. 3**

**Fig. 4**

Fig. 5

Fig. 6

SG4    SG1    SG3    SG6    SG2    SG5

S4    S1    S3    S6    S2    S5

U1    U2    U3

**Fig. 7**

S1    S3    S4    S2

U1    U2

**Fig. 8**

S1    S3    S2    S4

U1    U2

**Fig. 9**

S1

S4

S2

S3

S5

U1 × U2

**Fig. 10**

U1 U2

S2

S4

S5

S3

S1

U1 × U2

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4404086 B
- DE 102006033718 A1